# EUROPEAN PATENT APPLICATION

(11) **EP 4 447 258 A1**
(43) Date of publication of application: **16.10.2024**
(21) Application number: 24163392.4
(22) Date of filing: 13.03.2024
(51) Int. Cl.: H02J 7/00

(54) **DEVICE AND METHOD FOR CONTROLLING CHARGING OF BATTERY PACK**

(30) Priority: 07.04.2023 KR 20230046248
(71) Applicant: Samsung SDI Co., Ltd., Yongin-si, Gyeonggi-do 17084 (KR)
(72) Inventor: KAM, Jaewoo, 17084 Yongin-si (KR)
(74) Representative: Marks & Clerk LLP

(57) **Abstract**

A charging control method for a battery pack including a plurality of battery modules, includes: controlling charging of the battery pack in a constant current-constant voltage charging mode; changing a charging mode to a step charging mode based on a state deviation between the plurality of battery modules if a newly mounted battery module is detected from among the plurality of battery modules; controlling charging of the battery pack in the step charging mode by gradually decreasing a charging current of the battery pack if the charging mode is changed to the step charging mode; and returning the charging mode to the constant current-constant voltage charging mode based on the state deviation from among the plurality of battery modules if a full charge of the battery pack is detected during the charging in the step charging mode.

## Description

### BACKGROUND

### 1. Field

Aspects of embodiments of the present disclosure relate to a charging control apparatus for a battery pack, and a method thereof.

### 2. Description of Related Art

A secondary battery differs from a primary battery in that in the secondary battery, charging and discharging can be repeated, whereas in the primary battery, non-reversible conversion from chemical energy to electrical energy may be provided. A low-capacity secondary battery may be used as a power supply device for small electronic devices, such as portable telephones, laptops computers, and camcorders. A high-capacity secondary battery may be used as a power supply device for hybrid vehicles and the like.

In general, a secondary battery cell may include an electrode assembly, a case for accommodating the electrode assembly therein, and an electrode terminal electrically connected to the electrode assembly. The electrode assembly includes a positive electrode, a negative electrode, and a separator interposed between the positive electrode and the negative electrode. An electrolyte solution may be injected into the case to enable charging and discharging of the battery cell through an electrochemical reaction of the positive electrode, the negative electrode, and the electrolyte solution. A shape of the case, such as cylindrical or rectangular, depends on an application of the battery cell.

Battery cells may be connected in series and/or in parallel to form a battery module having high energy density. A battery pack may include one or more of the battery modules according to desired specifications. When only some of the battery modules constituting the battery pack are replaced while the battery pack is in use, safety problems, such as overcharging or overdischarging, may occur due to a difference in a deterioration between the battery modules that have been used previously and the new battery modules. Accordingly, even when some of the battery modules fail, the entire battery pack may be replaced, resulting in excessive replacement costs. In addition, a new battery module may not be added to the battery pack in order to increase capacity or voltage of the battery pack in use.

Accordingly, it may be desirable to prevent or substantially prevent safety problems due to differences in deterioration, even when only some of the battery modules constituting the battery pack are replaced with new battery modules, or even when new battery modules are added to the battery pack.

The above information disclosed in this Background section is for enhancement of understanding of the background of the present disclosure, and therefore, it may contain information that does not constitute prior art.

### SUMMARY

Embodiments of the present disclosure are directed to a charging control apparatus for a battery pack capable of solving, preventing or substantially solving or preventing safety problems, such as overcharging and/or overdischarging, which may be caused by a difference in a deterioration between battery modules that have been previously used in the battery pack and a newly installed battery module, if replacing only some of the battery modules constituting the battery pack, or if installing a new battery module to the battery pack, and a method thereof.

According to one or more embodiments of the present disclosure, a charging control method for a battery pack including or comprising a plurality of battery modules, includes: controlling charging of the battery pack in a constant current-constant voltage charging mode; changing a charging mode to a step charging mode based on a state deviation between the plurality of battery modules if a newly mounted battery module is detected from among the plurality of battery modules; controlling charging of the battery pack in the step charging mode by gradually decreasing a charging current of the battery pack if the charging mode is changed to the step charging mode; and returning the charging mode to the constant current-constant voltage charging mode based on the state deviation from among the plurality of battery modules if a full charge of the battery pack is detected during the charging in the step charging mode.

In an embodiment, the state deviation may include a module voltage deviation between the plurality of battery modules.

In an embodiment, the changing of the charging mode may include changing the charging mode to the step charging mode if the module voltage deviation is greater than a threshold.

In an embodiment, the threshold may be different depending on a period in which the module voltage deviation is detected from among a charging period, a discharging period, and an idle period.

In an embodiment, the returning of the charging mode to the constant current-constant voltage charging mode may include changing the charging mode to the constant current-constant voltage charging mode if the module voltage deviation detected during an idle period after the battery pack is fully charged is equal to or smaller than a threshold.

In an embodiment, the state deviation may include a state of charge (SOC) deviation between the plurality of battery modules.

In an embodiment, the changing of the charging mode may include changing the charging mode to the step charging mode if the SOC deviation is greater than a threshold.

In an embodiment, the threshold may be different depending on a period in which the SOC deviation is detected from among a charging period, a discharging period, and an idle period.

In an embodiment, the returning of the charging mode to the constant current-constant voltage charging mode may include changing the charging mode to the constant current-constant voltage charging mode if the SOC deviation detected during an idle period after the battery pack is fully charged is equal to or smaller than a threshold.

In an embodiment, the controlling of the charging of the battery pack by gradually decreasing the charging current of the battery pack may include determining the charging current in the step charging mode based on a voltage detected from the battery pack.

According to one or more embodiments of the present disclosure, a charging control apparatus for a battery pack including a plurality of battery modules, includes: a monitoring device configured to detect state information including voltages and a state of charge (SOC) of the plurality of battery modules; and a control device configured to select a charging mode of the battery pack from among a constant current-constant voltage charging mode and a step charging mode, and control charging of the battery pack according to the selected charging mode. The control device is further configured to: select the constant current-constant voltage charging mode as the charging mode if a new battery module is not mounted in the battery pack; change the charging mode to the step charging mode based on a state deviation between the plurality of battery modules if a new battery module is installed in the battery pack while the charging mode is the constant current-constant voltage charging mode; control charging of the battery pack in the step charging mode by gradually decreasing a charging current of the battery pack if the charging mode is changed to the step charging mode; and return the charging mode to the constant current-constant voltage charging mode based on the state deviation from among the plurality of battery modules if a full charge of the battery pack is detected during the charging in the step charging mode.

In an embodiment, the state deviation may include a module voltage deviation between the plurality of battery modules, and the control device may be configured to change the charging mode to the step charging mode if the module voltage deviation is greater than a threshold.

In an embodiment, the control device may be further configured to select the threshold differently depending on a period in which the module voltage deviation is detected from among a charging period, a discharging period, and an idle period.

In an embodiment, the control device may be configured to change the charging mode to the constant current-constant voltage charging mode if the module voltage deviation detected during an idle period after the battery pack is fully charged is equal to or smaller than a threshold.

In an embodiment, the state deviation may include a state of charge (SOC) deviation between the plurality of battery modules, and the control device may be configured to change the charging mode to the step charging mode if the SOC deviation is greater than a threshold.

In an embodiment, the control device may be further configured to select the threshold differently depending on a period in which the SOC deviation is detected from among a charging period, a discharging period, and an idle period.

In an embodiment, the control device may be configured to change the charging mode to the constant current-constant voltage charging mode if the SOC deviation detected during an idle period after the battery pack is fully charged is equal to or smaller than a threshold.

In an embodiment, the control device may be further configured to determine the charging current in the step charging mode based on a voltage detected from the battery pack.

According to one or more embodiments of the present disclosure, safety problems that may be caused by a difference in a deterioration between battery modules previously used in the battery pack and a newly installed battery module may be prevented or substantially prevented, for example, if replacing some of the battery modules constituting the battery pack, or if installing a new battery module to the battery pack.

At least some of the above and other features of the invention are set out in the claims.

### BRIEF DESCRIPTION OF THE DRAWINGS

The above and other aspects and features of the present disclosure will be more clearly understood from the following detailed description of the illustrative, nonlimiting embodiments, as described purely by way of example with reference to the accompanying drawings.
FIG. 1 schematically illustrates a charging control apparatus for a battery pack according to an embodiment.
FIG. 2 schematically illustrates a charging control method for a battery pack according to an embodiment.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween, such as a switch, a resistor, a capacitor, and/or the like. As used herein, an expression of connection indicates an electrical connection unless explicitly described to be a direct connection. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

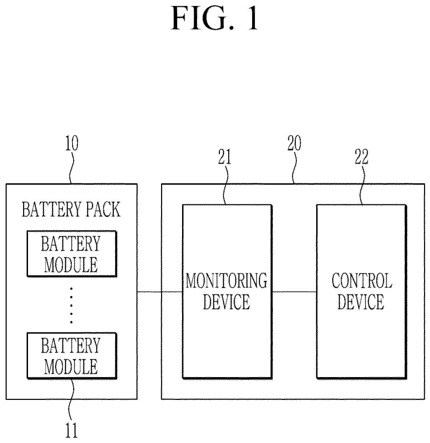

FIG. 1 schematically illustrates a charging control apparatus for a battery pack according to an embodiment.

Referring to FIG. 1, a battery pack 10 may include a plurality of battery modules (e.g., batteries) 11 connected in series to each other. Each of the battery modules 11 may include a plurality of battery cells connected in series or in parallel to each other.

A charging control apparatus 20 controls charging of the battery pack 10, and may include a monitoring device 21 and a control device 22.

The monitoring device 21 may monitor a state (e.g., a voltage, a current, a temperature, and/or the like) of the battery pack 10 to detect state information indicating the state of the battery pack 10.

The monitoring device 21 may detect a voltage of each cell constituting the battery pack 10 or each of the battery modules 11. The monitoring device 21 may detect a charging current or a discharging current flowing in the battery pack 10. The monitoring device 21 may detect a temperature of at least one point of the battery pack 10.

The control device 22 may receive the state information (e.g., the voltage, the current, and/or the temperature) of the battery pack 10 from the monitoring device 21. The control device 22 may monitor the state of the battery pack 10 (e.g., a pack voltage, a module voltage, a cell voltage, a charging current, a discharging current, a temperature, a state of charge (SOC), a state of health (SOH), and/or the like) based on the state information received from the monitoring device 21. In addition, the control device 22 may perform the overall control functions (e.g., a temperature control, a balancing control, a charging or discharging control, and the like) for the battery pack 10, a protection function (e.g., over-discharge protection, over-charge protection, overcurrent protection, and/or the like), and the like based on a result of monitoring the state of the battery pack 10. In addition, the control device 22 may perform a communication function with an external device (e.g., a charging device, a host controller, and/or the like) of the battery pack 10.

The control device 22 may detect a new battery module that is newly installed in the battery pack 10, for example, due to replacement or addition of the battery module 11.

Mounting of the new battery module to the battery pack 10 may be detected by various suitable methods. For example, installation information of a new battery module may be transferred to the control device 22 by a manager who manages the battery pack 10. The manager may input identification information, position information, and the like of the new battery module that is newly installed in the battery pack 10 through an input device, and the information that is input may be transferred to the control device 22 through the input device. The manager may also input the identification information, the position information, and the like of the new battery module to a manager terminal or an upper controller of the battery pack 10, and the information that is input may be transferred to the control device 22 from the manager terminal or the upper controller through wired or wireless communication. In addition, for example, the control device 22 may acquire and manage unique identification information (e.g., a serial number and/or the like) for identifying each of the battery modules 11 from among the battery modules 11 constituting the battery pack 10, and may detect the mounting of the new battery module based on the identification information. If identification information is acquired from the battery modules 11, the control device 22 may compare the identification information with stored (e.g., prestored) identification information to detect whether or not a new battery module is mounted. In this case, if the new battery module is detected, the control device 22 may additionally store identification information of the detected new battery module.

However, the present disclosure is not limited thereto, and in addition to, or in lieu of, the above-described method, the mounting of the new battery module may be detected using various suitable methods, for example, such as a method of using a physical signal that is generated if the battery module 11 is detached.

If a new battery module that is newly installed in the battery pack 10 is detected, the control device 22 may change a charging mode based on a state deviation (e.g., a module voltage, an SOC deviation, and/or the like) between the battery modules 11 in the battery pack 10.

As the charging mode of the battery pack 10, a constant current (CC)-constant voltage (CV) mode may be set as a default. The control device 22 may control the battery pack 10 to be charged in a predefined CC-CV charging mode (hereinafter, referred to as a "normal charging mode") in a normal state, in which the replacement or addition of the battery module 11 does not occur in the battery pack 10. For example, the control device 22 may charge the battery pack 10 with a predetermined constant current (e.g., 20A) until the voltage of the battery pack 10 reaches a predetermined cut-off voltage (in a CC mode), and if the voltage of the battery pack 10 reaches the cut-off voltage, the control device 22 may control an operation of a charging device to charge the battery pack 10 with a predetermined constant voltage (e.g., 100 V) (in a CV mode) until a current of the battery pack 10 reaches a predetermined cut-off current.

If a new battery module is detected from the battery pack 10, the control device 22 may determine whether or not to change the charging mode of the battery pack 10 based on the state deviation between the battery modules 11. For example, the control device 22 may detect a deviation between module voltages of the battery modules 11 through the monitoring device 21, and if the detected voltage deviation is greater than a threshold, the control device 22 may change the charging mode of the battery pack 10 from a normal charging mode to a step charging mode. In addition, for example, the control device 22 may detect a deviation between SOCs of the battery modules 11, and if the detected SOC deviation is greater than a threshold, the control device 22 may change the charging mode of the battery pack 10 from the normal charging mode to the step charging mode.

Currents flowing through the battery pack 10 may be different from each other during a charging period, a discharging period, and an idle period of the battery pack 10. As a result, even for the same battery pack 10, the voltage deviation/the SOC deviation between the battery modules 11 detected during the charging period, the discharging period, and the idle period may be different. Accordingly, a threshold as a criterion for changing the charging mode may be set differently according to a period (e.g., the charging period, the discharging period, or the idle period) in which the voltage deviation/the SOC deviation between the battery modules 11 is detected. For example, the control device 22 may change the charging mode to the step charging mode if the voltage deviation/the SOC deviation between the battery modules 11 detected during the charging period is greater than a first threshold value. In addition, for example, the control device 22 may change the charging mode to the step charging mode if the voltage deviation/the SOC deviation between the battery modules 11 detected during the discharging period is greater than a second threshold value. For example, the control device 22 may change the charging mode to the step charging mode if the voltage deviation/the SOC deviation between the battery modules 11 detected during the idle period is greater than a third threshold value.

During the step charging mode, the charging device may charge the battery pack 10 while gradually lowering a charging current until the state (e.g., the voltage or the current) of the battery pack 10 satisfies a full charge condition. During the step charging mode, the charging current supplied from the charging device may be reduced stepwise or linearly. In addition, the charging current in the step charging mode may be adjusted according to the voltage of the battery pack 10 or the voltage deviation between the battery modules 11. In other words, the control device 22 may flexibly adjust the charging current output from the charging device based on the voltage of the battery pack 10 detected from the battery pack 10 or the voltage deviation between the battery modules 11.

During the charging in the step charging mode, the control device 22 may compare the voltage and/or the current of the battery pack 10 with a full charge condition to detect a full charge of the battery pack 10. For example, the control device 22 may determine that the battery pack 10 is fully charged if the voltage of the battery pack 10 reaches a predetermined fully charged voltage.

If the full charge of the battery pack 10 is detected during the charging in the step charging mode, the control device 22 may detect a state deviation between the battery modules 11, and may determine whether or not to change the charging mode again by comparing the detected state deviation with a predetermined threshold. For example, the control device 22 may detect a deviation between module voltages of the battery modules 11, and if the detected voltage deviation is equal to or smaller than the threshold, the control device 22 may change the charging mode of the battery pack 10 from the step charging mode to the normal charging mode. In addition, for example, the control device 22 may detect a deviation between SOCs of the battery modules 11, and if the detected SOC deviation is equal to or smaller than the threshold, the control device 22 may change the charging mode of the battery pack 10 from the step charging mode to the normal charging mode.

The control device 22 may include at least one processor, and may be implemented by a battery management system (BMS) that manages the battery pack 10, a control device that manages an electronic device in which the battery pack 10 is mounted, or a control device that manages a charging device.

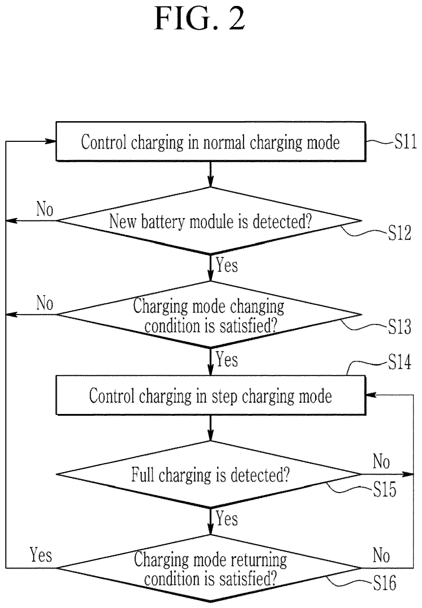

FIG. 2 schematically illustrates a charging control method for a battery pack according to an embodiment. The charging control method illustrated in FIG. 2 may be performed by the charging control apparatus 20 described above with reference to FIG. 1.

Referring to FIG. 2, the control device 22 of the charging control apparatus 20 according to an embodiment may control charging of the battery pack 10 in a normal charging mode in a normal state of the battery pack 10 (S11). For example, the control device 22 may control the charging device to charge the battery pack 10 in the CC-CV charging mode in the normal state.

If a new battery module is detected from the battery pack 10 in a state where the charging mode of the battery pack 10 is set to the normal charging mode (S12; YES), the control device 22 may check whether or not the state of the battery pack 10 satisfies a charging mode change condition (S13).

In block S13, the control device 22 may detect a module voltage deviation/SOC deviation between the battery modules 11 constituting the battery pack 10 using the monitoring device 21, and may determine whether or not a charging mode changing condition is satisfied by comparing the module voltage deviation/the SOC deviation with a threshold (e.g., a predetermined threshold). For example, the control device 22 may determine that the charging mode changing condition is satisfied if the module voltage deviation between the battery modules 11 is greater than a threshold (e.g., a predetermined threshold). In addition, for example, the control device 22 may determine that the charging mode changing condition is satisfied if the SOC deviation of the battery modules 11 is greater than a threshold (e.g., a predetermined threshold). In this case, the threshold that is compared with the module voltage deviation/the SOC deviation may be set differently for each of the charging period, the discharging period, and the idle period of the battery pack 10.

If it is determined that the state of the battery pack 10 satisfies the charging mode changing condition (S13; YES), the control device 22 may control charging of the battery pack 10 in the step charging mode (S14). In other words, the control device 22 may control the charging control apparatus to charge the battery pack 10 in the step charging mode.

In block S14, while the battery pack 10 is being charged in the step charging mode, a charging current applied to the battery pack 10 from the charging device may decrease stepwise or linearly.

In block S14, the charging current in the step charging mode may be dynamically adjusted according to a voltage (e.g., a pack voltage, a module voltage, and/or the like) detected from the battery pack 10 or the voltage deviation between the battery modules 11. In other words, the control device 22 may dynamically adjust a value of the charging current applied to the battery pack 10 from the charging device according to the voltage (e.g., the pack voltage, the module voltage, and/or the like) detected from the battery pack 10 or the voltage deviation between the battery modules 11.

If a full charge of the battery pack 10 is detected during the charging in the step charging mode (S15; YES), the control device 22 may check whether or not the state of the battery pack 10 satisfies a charging mode returning condition (S16).

In block S15, the control device 22 may compare the voltage and/or current of the battery pack 10 with a full charging condition to detect the full charge of the battery pack 10. For example, the control device 22 may determine that the battery pack 10 is fully charged, if the voltage of the battery pack 10 reaches a suitable fully charged voltage (e.g., a predetermined fully charged voltage).

In block S16, the control device 22 may detect the state deviation between the battery modules 11 during the idle period after the full charge detection, and may determine whether or not the state of the battery pack 10 satisfies the charging mode returning condition to return to the normal charging mode by comparing the detected state deviation with the threshold (e.g., the predetermined threshold). For example, the control device 22 may detect the deviation between the module voltages of the battery modules 11 during the idle period after the full charge, and if the detected voltage deviation is smaller than or equal to a threshold, the control device 22 may determine that the charging mode returns to the normal charging mode. In addition, for example, the control device 22 may detect the deviation between the SOCs of the battery modules 11 during the idle period after the full charge, and if the detected SOC deviation is equal to or smaller than the threshold, the control device 22 may be determine that the charging mode returns to the normal charging mode.

In block S16, if the state of the battery pack 10 does not satisfy the charging mode returning condition (S16; NO), the control device 22 may continue controlling the battery pack 10 to be charged in the step charging mode, until the state of the battery pack 10 satisfies the charging mode returning condition (S16; YES).

According to one or more of the embodiments described above, if a new battery module is installed in the battery pack 10 by a module replacement, a module addition, and/or the like, and thus, the state deviation of the battery modules 11 becomes larger than a threshold, the charging control apparatus 20 may gradually reduce a charging current to suppress a further voltage rise. Accordingly, overcharging of the new battery module may be effectively prevented, while increasing or maximizing the capacity of the battery pack 10.

An electronic device, an electrical device, and/or any other related device or component according to the embodiments of the present disclosure described above may be implemented using any suitable hardware, firmware (e.g., an application-specific integrated circuit), software, or a combination of software, firmware, and hardware. For example, various components of these devices may be disposed on one integrated circuit (IC) chip or on separate IC chips. In addition, various components of these devices may be implemented on a flexible printed circuit film (TCP), a tape carrier package (TCP), a printed circuit board (PCB), or on one substrate. The electrical connections or interconnections described in the present specification may be implemented by wires or conductive elements, for example, on a PCB or on other suitable kinds of circuit carriers. The conductive element may include, for example, metallizations, such as surface metallizations, and/or pins, and may include conductive polymers or ceramics.

In addition, various components of these devices may be executed on one or more processors to perform the various functions described herein, and within one or more computing devices, and may be processes or threads that execute computer program instructions and may interact with other system components. Computer program instructions are stored in memory that can be implemented in a computing device using a standard memory device, such as, for example, random access memory (RAM). The computer program instructions may also be stored on other non-transitory computer readable media, for example, CD-ROMs, flash drives, and the like.

In addition, those skilled in the art will recognize that the functions of the various computing devices may be combined or integrated with each other into a single computing device, or a function of a particular computing device may be distributed across one or more other computing devices.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

### Description of Symbols

10: battery pack
11: battery module
20: charging control apparatus
21: monitoring device
22: control device

## Claims

1. A charging control method for a battery pack comprising a plurality of battery modules, the method comprising:
controlling charging of the battery pack in a constant current-constant voltage charging mode;
changing a charging mode to a step charging mode based on a state deviation between the plurality of battery modules if a newly mounted battery module is detected from among the plurality of battery modules;
controlling charging of the battery pack in the step charging mode by gradually decreasing a charging current of the battery pack if the charging mode is changed to the step charging mode; and
returning the charging mode to the constant current-constant voltage charging mode based on the state deviation from among the plurality of battery modules if a full charge of the battery pack is detected during the charging in the step charging mode.

2. The charging control method as claimed in claim 1, wherein the state deviation comprises a module voltage deviation between the plurality of battery modules.

3. The charging control method as claimed in claim 2, wherein the changing of the charging mode comprises changing the charging mode to the step charging mode if the module voltage deviation is greater than a threshold, optionally wherein the threshold is different depending on a period in which the module voltage deviation is detected from among a charging period, a discharging period, and an idle period.

4. The charging control method as claimed in claim 2 or claim 3, wherein the returning of the charging mode to the constant current-constant voltage charging mode comprises changing the charging mode to the constant current-constant voltage charging mode if the module voltage deviation detected during an idle period after the battery pack is fully charged is equal to or smaller than a threshold.

5. The charging control method as claimed in claim 1, wherein the state deviation comprises a state of charge (SOC) deviation between the plurality of battery modules.

6. The charging control method as claimed in claim 5, wherein the changing of the charging mode comprises changing the charging mode to the step charging mode if the SOC deviation is greater than a threshold, optionally wherein the threshold is different depending on a period in which the SOC deviation is detected from among a charging period, a discharging period, and an idle period.

7. The charging control method as claimed in claim 5 or claim 6, wherein the returning of the charging mode to the constant current-constant voltage charging mode comprises changing the charging mode to the constant current-constant voltage charging mode if the SOC deviation detected during an idle period after the battery pack is fully charged is equal to or smaller than a threshold.

8. The charging control method as claimed in any one of the preceding claims, wherein the controlling of the charging of the battery pack by gradually decreasing the charging current of the battery pack comprises determining the charging current in the step charging mode based on a voltage detected from the battery pack.

9. A charging control apparatus for a battery pack comprising a plurality of battery modules, the apparatus comprising:
a monitoring device configured to detect state information comprising voltages and a state of charge (SOC) of the plurality of battery modules; and
a control device configured to select a charging mode of the battery pack from among a constant current-constant voltage charging mode and a step charging mode, and control charging of the battery pack according to the selected charging mode,
wherein the control device is further configured to:
select the constant current-constant voltage charging mode as the charging mode if a new battery module is not mounted in the battery pack;
change the charging mode to the step charging mode based on a state deviation between the plurality of battery modules if a new battery module is installed in the battery pack while the charging mode is the constant current-constant voltage charging mode;
control charging of the battery pack in the step charging mode by gradually decreasing a charging current of the battery pack if the charging mode is changed to the step charging mode; and
return the charging mode to the constant current-constant voltage charging mode based on the state deviation from among the plurality of battery modules if a full charge of the battery pack is detected during the charging in the step charging mode.

10. The charging control apparatus as claimed in claim 9, wherein the state deviation comprises a module voltage deviation between the plurality of battery modules, and
wherein the control device is configured to change the charging mode to the step charging mode if the module voltage deviation is greater than a threshold, optionally wherein the control device is further configured to select the threshold differently depending on a period in which the module voltage deviation is detected from among a charging period, a discharging period, and an idle period.

11. The charging control apparatus as claimed in claim 10, wherein the control device is configured to change the charging mode to the constant current-constant voltage charging mode if the module voltage deviation detected during an idle period after the battery pack is fully charged is equal to or smaller than a threshold.

12. The charging control apparatus as claimed in claim 9, wherein the state deviation comprises a state of charge (SOC) deviation between the plurality of battery modules, and
wherein the control device is configured to change the charging mode to the step charging mode if the SOC deviation is greater than a threshold, optionally wherein the control device is further configured to select the threshold differently depending on a period in which the SOC deviation is detected from among a charging period, a discharging period, and an idle period.

13. The charging control apparatus as claimed in claim 12, wherein the control device is configured to change the charging mode to the constant current-constant voltage charging mode if the SOC deviation detected during an idle period after the battery pack is fully charged is equal to or smaller than a threshold.

14. The charging control apparatus as claimed in claim 9, wherein the control device is further configured to determine the charging current in the step charging mode based on a voltage detected from the battery pack.

15. The charging control method as claimed in any one of claim 1 to 8 carried out using the charging control apparatus according to any one of claims 9 to 14.
